# EUROPEAN PATENT APPLICATION

(11) **EP 4 382 768 A1**
(43) Date of publication of application: **12.06.2024**
(21) Application number: 22898603.0
(22) Date of filing: 24.11.2022
(51) Int. Cl.: F16H 1/32, F16H 48/08, H02K 7/116

(54) **DRIVE DEVICE FOR VEHICLE**

(30) Priority: 24.11.2021 JP 2021190505
(71) Applicant: AISIN CORPORATION, Kariya-shi, Aichi 448-8650 (JP)
(72) Inventor: YAMASAKI, Shoichi, Kariya-shi, Aichi 448-8650 (JP); TORII, Takeshi, Kariya-shi, Aichi 448-8650 (JP); ONISHI, Chihiro, Kariya-shi, Aichi 448-8650 (JP); HATTORI, Soichiro, Kariya-shi, Aichi 448-8650 (JP); KOMORI, Takafumi, Kariya-shi, Aichi 448-8650 (JP); YAMAMOTO, Akira, Kariya-shi, Aichi 448-8650 (JP); MUKAIYAMA, Koki, Kariya-shi, Aichi 448-8650 (JP)
(74) Representative: Kramer Barske Schmidtchen Patentanwälte PartG mbB
(86) International application number: PCT/JP2022/043311
(87) International publication number: WO 2023/095821

(57) **Abstract**

A carrier (CR) rotatably supports a first pinion gear (PG1) and a second pinion gear (PG2) that rotate integrally with each other. One of the carrier (CR) and a ring gear (RG) is connected to a first gear (32) so as to rotate integrally with the first gear (32). A second gear (33) meshes with the first gear (32). The first gear (32) and the second gear (33) are each a double helical gear having a pair of tooth portions with mutually opposite helix directions. The first pinion gear (PG1) and the second pinion gear (PG2) are each a helical gear. The helix directions of the tooth portions of the first pinion gear (PG1) and the second pinion gear (PG2) are set such that the thrust load that the first pinion gear (PG1) receives from a sun gear (SG) and the thrust load that the second pinion gear (PG2) receives from the ring gear (RG) are opposite to each other.

## Description

### TECHNICAL FIELD

The present invention relates to a drive device for vehicle including a rotating electric machine including a rotor, an output member drivingly connected to wheels, a power transmission mechanism that transmits rotation of the rotor to the output member, and a case that houses the rotating electric machine and the power transmission mechanism.

### BACKGROUND ART

An example of such a drive device for vehicle is disclosed in Patent Literature 1 below. In the following description of "BACKGROUND ART" and "TECHNICAL PROBLEMS", reference numerals in Patent Literature 1 are cited in parentheses.

In a drive device for vehicle (100) of Patent Literature 1, a power transmission mechanism (21) transmits rotation of a rotor (12) of a rotating electric machine (1) to a differential case (33) of a differential gear mechanism (3) serving as an output member. The differential gear mechanism (3) distributes the rotation transmitted to the differential case (33) to a pair of wheels (W).

### CITATIONS LIST

### PATENT LITERATURE

Patent Literature 1: JP 2020-175707 A

### SUMMARY OF INVENTION

### TECHNICAL PROBLEMS

In a drive device for vehicle (100) of Patent Literature 1, the power transmission mechanism (21) includes a plurality of planetary gear mechanisms (PG1, PG2) arranged side by side in the axial direction to ensure a large reduction ratio. In general, because the planetary gear mechanism includes a plurality of gears arranged in the radial direction, the radial dimension tends to become large. Therefore, the above drive device for vehicle (100) including the plurality of planetary gear mechanisms (PG1, PG2) arranged side by side in the axial direction has a problem of being easily increased in size.

Therefore, it is desired to realize a drive device for vehicle that can be easily downsized while a large reduction ratio is ensured.

### SOLUTIONS TO PROBLEMS

In view of the above, a drive device for vehicle has a characteristic configuration including:
a rotating electric machine including a rotor;
an output member drivingly connected to a wheel;
a power transmission mechanism that transmits rotation of the rotor to the output member; and
a case that houses the rotating electric machine and the power transmission mechanism, in which
the power transmission mechanism includes a planetary gear mechanism, a first gear, and a second gear,
the planetary gear mechanism includes a sun gear, a carrier, and a ring gear,
the sun gear is connected to the rotor so as to rotate integrally with the rotor,
the carrier rotatably supports a first pinion gear and a second pinion gear that rotate integrally with each other,
defining that one of the carrier and the ring gear is a first element and the other of the carrier and the ring gear is a second element,
the first element is connected to the first gear so as to rotate integrally with the first gear,
the second element is fixed to the case,
the second gear meshes with the first gear and is connected to the output member so as to rotate integrally with the output member,
the first pinion gear meshes with the sun gear,
the second pinion gear meshes with the ring gear,
the first gear and the second gear are each a double helical gear including a pair of tooth portions having mutually opposite helix directions,
the first pinion gear and the second pinion gear are each a helical gear, and
the first pinion gear and the second pinion gear each include tooth portions whose helix direction is set such that a thrust load that the first pinion gear receives from the sun gear and a thrust load that the second pinion gear receives from the ring gear are opposite to each other.

According to this characteristic configuration, a two-shaft configuration can be realized in which the rotating electric machine, the planetary gear mechanism, and the first gear, and the output member and the second gear, are disposed on different axes from each other. With this configuration, the radial dimension of the drive device for vehicle can be suppressed small as compared with a multi-shaft configuration including three or more shafts including, for example, a counter gear mechanism or the like.

In addition, according to the present characteristic configuration, the carrier of the planetary gear mechanism supports the first pinion gear and the second pinion gear that rotate integrally with each other. The sun gear that rotates integrally with the rotor meshes with the first pinion gear. Further, one of the carrier and the ring gear is connected to the first gear so as to rotate integrally with the first gear, and the other of the carrier and the ring gear is fixed to the case. The ring gear meshes with the second pinion gear. Here, because the gear diameters and the number of teeth of the first pinion gear and the second pinion gear can be set independently, according to the present characteristic configuration, a large reduction ratio can be easily secured by the planetary gear mechanism configured as described above without having a plurality of planetary gear mechanisms provided. In addition, this also enables even a small rotating electric machine to transmit high torque to the output member.

In addition, according to the present characteristic configuration, because the first gear and the second gear are double helical gears, thrust loads generated in the first gear and the second gear can be reduced, and a large thrust load can be prevented from being transmitted to the transmission member that transmits power between these gears. Furthermore, because the first pinion gear and the second pinion gear are helical gears in which the helix directions of the respective tooth portions are set as described above, the thrust load generated in the carrier that supports the first pinion gear and the second pinion gear can be reduced, and a large thrust load can be prevented from being transmitted to the transmission member that transmits power to and from the carrier. Therefore, for the first gear, the second gear, the carrier, and the transmission member that transmits power to and from these members, a support structure can be simplified and the need to ensure high rigidity can be reduced, and the drive device for vehicle can be easily downsized.

As described above, according to the present characteristic configuration, a drive device for vehicle that can be easily downsized while a large reduction ratio is ensured can be realized.

### BRIEF DESCRIPTION OF DRAWINGS

FIG. 1 is a cross-sectional view along an axial direction of a drive device for vehicle according to an embodiment.
FIG. 2 is a partially enlarged view of Fig. 1.
FIG. 3 is a skeleton view of the drive device for vehicle according to the embodiment.
FIG. 4 is a perspective view of a ring gear according to the embodiment.
FIG. 5 is a perspective view of a first pinion gear and a second pinion gear according to the embodiment.
FIG. 6 is a perspective view of a first gear according to the embodiment.
FIG. 7 is a perspective view of a second gear according to the embodiment.

### DESCRIPTION OF EMBODIMENTS

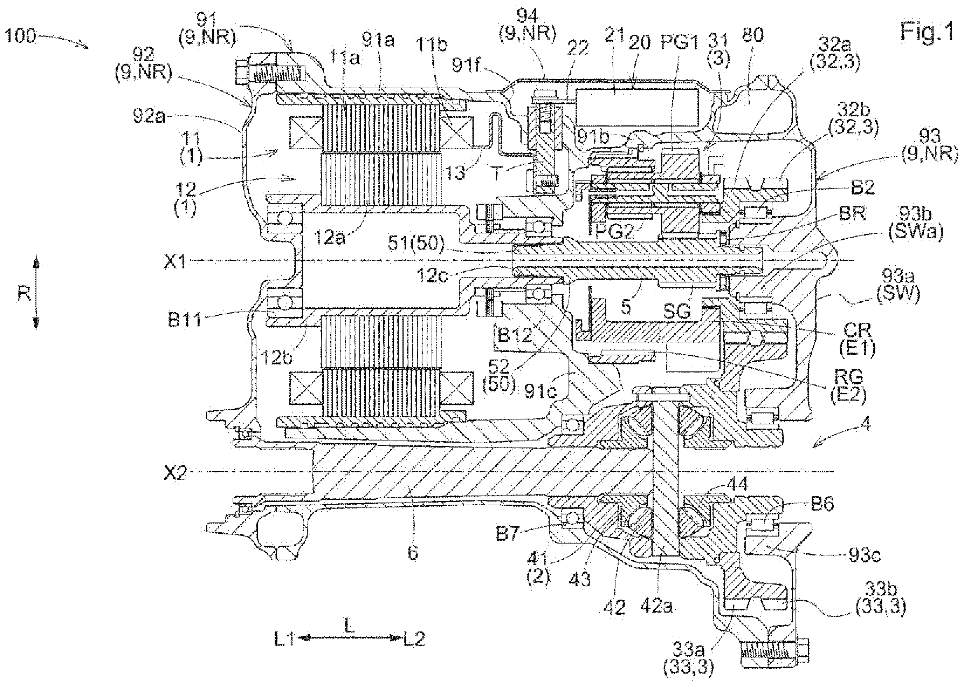

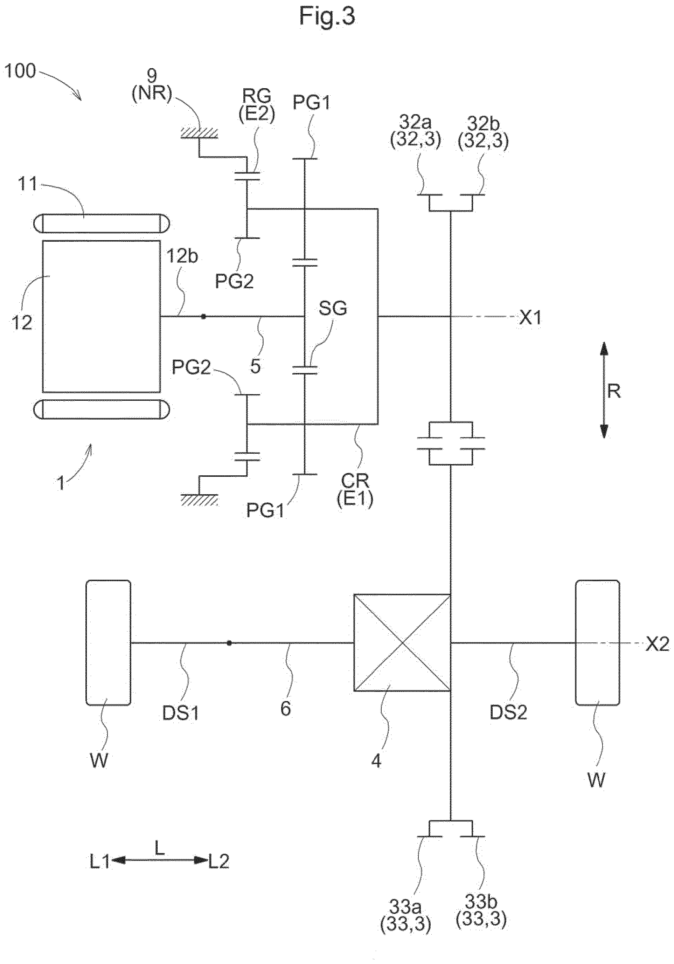

Hereinafter, a drive device for vehicle 100 according to an embodiment is described with reference to the drawings. As illustrated in FIGS. 1 and 3, the drive device for vehicle 100 includes a rotating electric machine 1, an output member 2, a power transmission mechanism 3, and a case 9. In the present embodiment, the drive device for vehicle 100 further includes a differential gear mechanism 4.

The rotating electric machine 1 includes a stator 11 and a rotor 12. An axial direction L to be described later is a direction along a rotation axis of the rotor 12. The rotating electric machine 1 functions as a driving force source for wheels W (see FIG. 3). The rotating electric machine 1 has a function as a motor (electric motor) that receives electric power supply and generates motive power, and a function as a generator that receives motive power supply and generates electric power. Specifically, the rotating electric machine 1 is electrically connected to a power storage device (not illustrated) such as a battery and a capacitor. The rotating electric machine 1 is powered by the electric power stored in the power storage device to generate driving force. In addition, the rotating electric machine 1 performs power generation by the driving force transmitted from the wheels W side to charge the power storage device.

The output member 2 is drivingly connected to the wheels W of a vehicle (vehicle on which the drive device for vehicle 100 is mounted). The power transmission mechanism 3 is configured to transmit the rotation of the rotor 12 to the output member 2. The power transmission mechanism 3 includes a planetary gear mechanism 31, a first gear 32, and a second gear 33. The differential gear mechanism 4 is configured to distribute torque transmitted to the output member 2 to the pair of wheels W.

Here, in the present application, "drivingly connected" refers to a state in which two rotating elements are connected so as to be able to transmit driving force, and includes a state in which the two rotating elements are connected so as to rotate integrally, or a state in which the two rotating elements are connected so as to be able to transmit driving force via one or two or more transmission members. Examples of such a transmission member include various members that transmit rotation at the same speed or at a variable speed, such as a shaft, a gear mechanism, a belt, and a chain. Note that, as the transmission member, an engagement device that selectively transmits rotation and driving force, for example, a friction engagement device, a meshing engagement device, or the like may be included. However, the term "drivingly connected" for each rotating element of the planetary gear mechanism refers to a state in which a plurality of the rotating elements in the planetary gear mechanism are connected to each other without another rotating element interposed therebetween.

The rotor 12, the planetary gear mechanism 31, and the first gear 32 are disposed on a first axis X1 which is an axial center thereof. Furthermore, the output member 2 and the second gear 33 are disposed on a second axis X2 which is an axial center thereof. In the present embodiment, the differential gear mechanism 4 is also disposed on the second axis X2. The first axis X1 and the second axis X2 are disposed so as to be parallel to each other.

In the following description, a direction parallel to the first axis X1 and the second axis X2 is referred to as an "axial direction L" of the drive device for vehicle 100. One side in the axial direction L is referred to as an "axial first side L1", and the other side in the axial direction L is referred to as an "axial second side L2". In the present embodiment, in the axial direction L, a side where the rotor 12 is disposed with respect to the planetary gear mechanism 31 (in other words, the side where the rotor 12 is disposed with respect to a sun gear SG to be described later) is referred to as the axial first side L1, and the opposite side to the axial first side L1 is referred to as the axial second side L2. In addition, a direction orthogonal to each of the first axis X1 and the second axis X2 is referred to as a "radial direction R" with respect to each axis. Note that, in a case where it is not necessary to distinguish which axis is to be used as a reference, or in a case where it is clear which axis is to be used as a reference, there are cases where the term is simply referred to as the "radial direction R".

As illustrated in FIG. 1, the case 9 houses the rotating electric machine 1 and the power transmission mechanism 3. In the present embodiment, the case 9 also houses the output member 2 and the differential gear mechanism 4.

In the present embodiment, the case 9 includes a first case portion 91, a second case portion 92 joined to the first case portion 91 from the axial first side L1, and a third case portion 93 joined to the first case portion 91 from the axial second side L2.

The first case portion 91 includes a first peripheral wall portion 91a, a second peripheral wall portion 91b, and a partition wall portion 91c.

The first peripheral wall portion 91a is formed so as to cover the outer side of the rotating electric machine 1 in the radial direction R. The second peripheral wall portion 91b is formed so as to cover the outer side of the planetary gear mechanism 31 and the differential gear mechanism 4 in the radial direction R. The partition wall portion 91c is formed so as to separate the internal space of the first peripheral wall portion 91a and the internal space of the second peripheral wall portion 91b in the axial direction L. In the present embodiment, the first peripheral wall portion 91a is disposed on the axial first side L1 with respect to the partition wall portion 91c, and the second peripheral wall portion 91b is disposed on the axial second side L2 with respect to the partition wall portion 91c. The first peripheral wall portion 91a is formed in a tubular shape opened to the axial first side L1, and the second peripheral wall portion 91b is formed in a tubular shape opened to the axial second side L2.

The second case portion 92 includes a first sidewall portion 92a. The first sidewall portion 92a is formed so as to cover the axial first side L 1 of the rotating electric machine 1. In the present embodiment, the second case portion 92 is joined to the first case portion 91 from the axial first side L1 such that the opening of the first peripheral wall portion 91a on the axial first side L1 is closed by the first sidewall portion 92a.

The third case portion 93 includes a second sidewall portion 93a. The second sidewall portion 93a is formed so as to cover the axial second side L2 of the power transmission mechanism 3 and the differential gear mechanism 4. In the present embodiment, the third case portion 93 is joined to the first case portion 91 from the axial second side L2 such that the opening of the second peripheral wall portion 91b on the axial second side L2 is closed by the second sidewall portion 93a.

As illustrated in FIG. 1, the stator 11 of the rotating electric machine 1 includes a cylindrical stator core 11a. The stator core 11a is fixed to a non-rotating member NR. In the present embodiment, the stator core 11a is fixed to the first peripheral wall portion 91a of the case 9 serving as the non-rotating member NR. The rotor 12 of the rotating electric machine 1 includes a cylindrical rotor core 12a. The rotor core 12a is rotatably supported to the stator core 11a. In the present embodiment, the rotor 12 further includes a rotor shaft 12b connected to the rotor core 12a so as to rotate integrally therewith.

In the present embodiment, the rotating electric machine 1 is an inner rotor type rotating electric machine. Therefore, the rotor core 12a is disposed on the inner side of the stator core 11a in the radial direction R. Furthermore, the rotor shaft 12b is disposed on the inner side of the rotor core 12a in the radial direction R.

Moreover, in the present embodiment, the rotating electric machine 1 is a rotating field type rotating electric machine. Therefore, a stator coil is wound around the stator core 11a. In the present embodiment, the stator coil is wound around the stator core 11a such that a pair of coil end portions 11b is formed, the coil end portions protruding to both sides in the axial direction L with respect to the stator core 11a. Furthermore, although not illustrated, the rotor core 12a is provided with a permanent magnet.

In the present embodiment, the case 9 houses an inverter device 20 that drives and controls the rotating electric machine 1, and includes a catch tank 80 that stores the oil scraped up by a rotating member included in the power transmission mechanism 3. Specifically, the case 9 includes a housing chamber forming portion 91f that forms a housing chamber of the inverter device 20, and a fourth case portion 94 joined to the housing chamber forming portion 91f so as to close the opening of the housing chamber. That is, the inverter device 20 is housed in a space surrounded by the housing chamber forming portion 91f and the fourth case portion 94. In the present embodiment, the first case portion 91 includes the housing chamber forming portion 91f. In addition, in the present embodiment, the inverter device 20 includes a power module 21 in which a plurality of elements (switching elements and the like) constituting an inverter circuit are modularized, and an output bus bar 22 for outputting AC power from the power module 21. The output bus bar 22 is electrically connected to a power line 13 drawn out from the coil end portion 11b via a terminal block T.

In the present embodiment, the rotor shaft 12b is formed in a cylindrical shape having an axial center along the axial direction L. In addition, in the present embodiment, the rotor shaft 12b is disposed so as to protrude from the rotor core 12a to both sides in the axial direction L. A portion of the rotor shaft 12b protruding from the rotor core 12a toward the axial first side L1 is rotatably supported to the first sidewall portion 92a of the case 9 via a first rotor bearing B11. Meanwhile, a portion of the rotor shaft 12b protruding from the rotor core 12a toward the axial second side L2 is rotatably supported to the partition wall portion 91c of the case 9 via a second rotor bearing B12.

The rotor 12 is supported to the case 9 via the first rotor bearing B11 and the second rotor bearing B12 such that the rotor 12 is restricted from moving to both sides in the axial direction L with respect to the case 9. Specifically, the first rotor bearing B11 is disposed so as to abut on the rotor shaft 12b from the axial first side L1, and the movement of the rotor 12 to the axial first side L1 with respect to the case 9 is restricted by the first rotor bearing B11. The second rotor bearing B12 is disposed so as to abut on the rotor shaft 12b from the axial second side L2, and the movement of the rotor 12 to the axial second side L2 with respect to the case 9 is restricted by the second rotor bearing B12. In the present embodiment, the first rotor bearing B11 and the second rotor bearing B12 each correspond to a "first bearing".

The planetary gear mechanism 31 is configured to decelerate the rotation of the rotor 12 and transmit the rotation to the first gear 32. The planetary gear mechanism 31 includes a sun gear SG, a carrier CR, and a ring gear RG.

The sun gear SG is connected to the rotor 12 so as to rotate integrally therewith. In the present embodiment, the sun gear SG is connected to the rotor shaft 12b via an input shaft 5 so as to rotate integrally with the rotor shaft 12b.

The input shaft 5 is formed so as to extend along the axial direction L. In the present embodiment, the input shaft 5 is formed so as to extend from the sun gear SG to the axial first side L1. In the example illustrated in FIG. 1, the input shaft 5 is formed integrally with the sun gear SG.

In the present embodiment, the member (in the present embodiment, the input shaft 5) formed integrally with the sun gear SG includes a second connecting portion 50 connected to a first connecting portion 12c formed on the rotor 12 so as to rotate integrally with the first connecting portion 12c. The first connecting portion 12c is formed at an end on the axial second side L2 of the rotor shaft 12b included in the rotor 12. The second connecting portion 50 includes an engaging portion 51 and an enlarged diameter portion 52. The engaging portion 51 engages with the first connecting portion 12c so as to rotate integrally with the first connecting portion 12c. Specifically, the engaging portion 51 is disposed on the inner side of the first connecting portion 12c in the radial direction R, and is spline-engaged with the first connecting portion 12c. The enlarged diameter portion 52 is formed to have a larger diameter than the engaging portion 51. In the present embodiment, the enlarged diameter portion 52 is disposed so as to abut from the axial second side L2 on a surface (here, an end surface of the first connecting portion 12c on the axial second side L2) facing the axial second side L2 and formed in the first connecting portion 12c. The enlarged diameter portion 52 abuts on this surface in a state where a thrust load facing at least the axial first side L1 is generated in the sun gear SG. This allows the thrust load generated in the sun gear SG and directed to the axial first side L1 to be transmitted to the rotor shaft 12b and received by the first rotor bearing B11. In the present embodiment, the enlarged diameter portion 52 corresponds to an "abutting portion".

In the present embodiment, a thrust bearing BR that supports the input shaft 5 in the axial direction L is disposed between the input shaft 5 and the second sidewall portion 93a (specifically, a first protruding portion 93b to be described later) in the axial direction L. Therefore, the load facing the axial second side L2 generated in the sun gear SG is supported by the thrust bearing BR.

The carrier CR rotatably supports a first pinion gear PG1 and a second pinion gear PG2 that rotate integrally with each other. The first pinion gear PG1 meshes with the sun gear SG. The second pinion gear PG2 meshes with the ring gear RG. In the present embodiment, the second pinion gear PG2 is formed to have a smaller diameter than the first pinion gear PG1. In the present embodiment, the second pinion gear PG2 is disposed further on the axial first side L1 than the first pinion gear PG1. Each of the first pinion gear PG1 and the second pinion gear PG2 rotates (self-rotates) around its own axial center and rotates (revolves) around the sun gear SG together with the carrier CR. The first pinion gear PG1 and the second pinion gear PG2 are each provided in plural numbers at intervals along the own revolution trajectory of each of the first pinion gear PG1 and the second pinion gear PG2.

In the following description, one of the carrier CR and the ring gear RG is referred to as a "first element E1", and the other is referred to as a "second element E2".

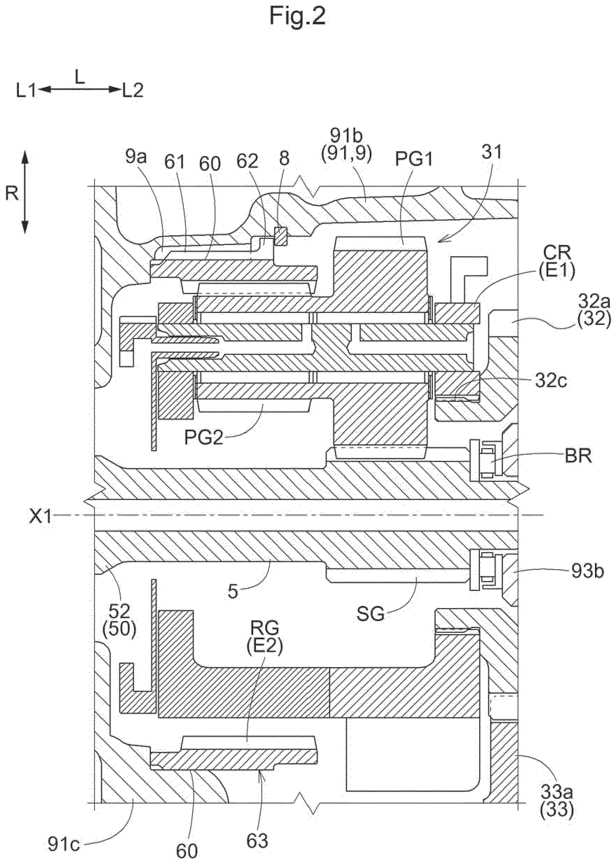

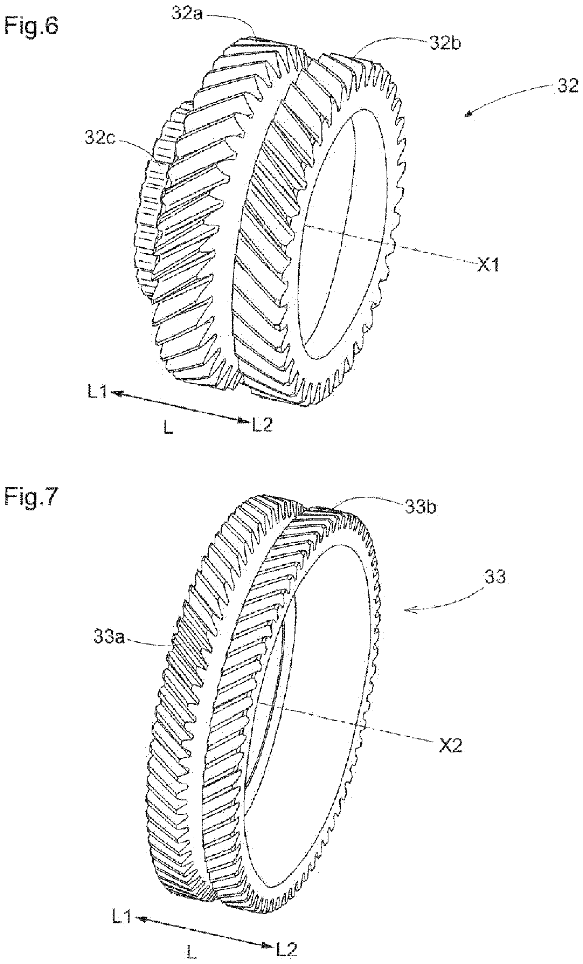

The first element E1 is connected to the first gear 32 so as to rotate integrally therewith. In the present embodiment, the carrier CR is connected to the first gear 32 so as to rotate integrally therewith. That is, in the present embodiment, the carrier CR is the first element E1. The carrier CR is connected to a connecting portion 32c (see FIGS. 2 and 6) formed in the first gear 32 so as to be relatively non-rotatable thereto. In the present embodiment, a portion of the carrier CR further on the axial second side L2 than the first pinion gear PG1 and the second pinion gear PG2 is connected to the connecting portion 32c.

The second element E2 is fixed to the case 9. In the present embodiment, the ring gear RG is fixed to the second peripheral wall portion 91b of the case 9. That is, in the present embodiment, the ring gear RG is the second element E2.

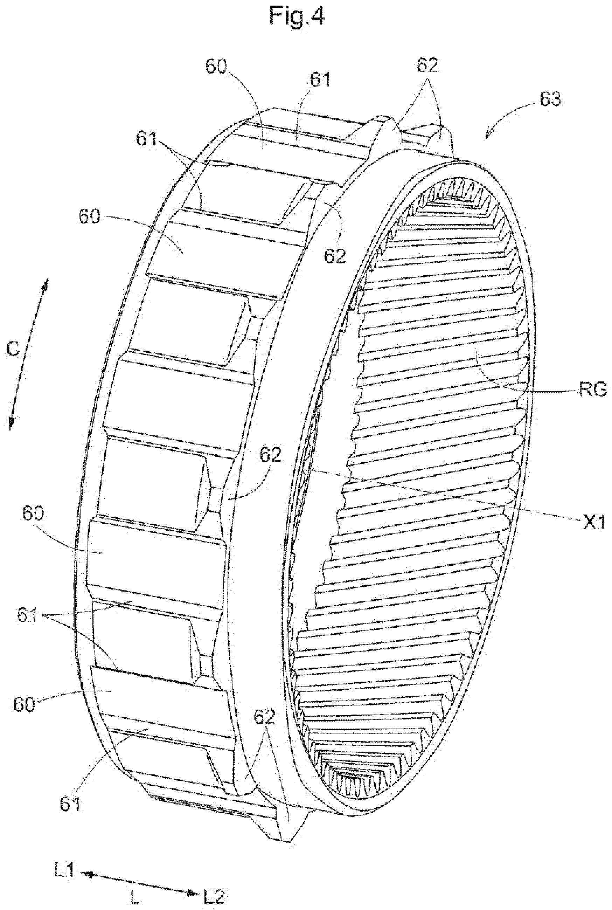

As illustrated in FIGS. 2 and 4, in the present embodiment, a supported portion 60, an engaging portion 61, and a movement restricting portion 62 are provided in the outer peripheral portion of the ring gear RG. Specifically, the ring gear RG is formed in the inner peripheral portion of a tubular member 63 formed in a tubular shape with the first axis X1 as an axial center, and the supported portion 60, the engaging portion 61, and the movement restricting portion 62 are formed in the outer peripheral portion of the tubular member 63. Here, the movement restricting portion 62 is formed at an end on the axial second side L2 in a region in the axial direction L where the supported portion 60 and the engaging portion 61 are formed.

The supported portion 60 is formed so as to be in contact with the inner surface of the case 9 and supported by the case 9 from the outer side in the radial direction R (direction orthogonal to the rotation axis of the rotor 12). The engaging portion 61 is formed so as to be engaged with the inner surface of the case 9 in a circumferential direction C (direction around the rotation axis of the rotor 12). Here, an engaged portion 9a (see FIG. 2) including a plurality of internal teeth dispersedly arranged in the circumferential direction C is formed in the first case portion 91. A plurality of the supported portions 60 are dispersedly arranged in the circumferential direction C so as to be in contact with the tooth crests of the plurality of internal teeth included in the engaged portion 9a from the inner side in the radial direction R. This causes the tubular member 63 to be connected to the first case portion 91 so as to be immovable with respect to the first case portion 91 in the radial direction R. Furthermore, a plurality of the engaging portions 61 are dispersedly arranged in the circumferential direction C so as to be in contact with the plurality of internal teeth included in the engaged portion 9a in the circumferential direction C. This causes the tubular member 63 to be connected to the first case portion 91 so as to be non-rotatable with respect to the first case portion 91.

As illustrated in FIG. 2, the movement restricting portion 62 is formed such that the movement thereof in the axial direction L is restricted by abutting in the axial direction L on a restricting member 8 attached to the inner surface of the case 9. Here, a snap ring as the restricting member 8 is locked to the inner surface of the first case portion 91 (specifically, the second peripheral wall portion 91b). The restricting member 8 is disposed on the axial second side L2 with respect to the movement restricting portion 62 so as to restrict the movement of the tubular member 63 toward the axial second side L2. The tubular member 63 is disposed so as to abut on the partition wall portion 91c from the axial second side L2, and the movement of the tubular member 63 to the axial first side L1 is restricted by the partition wall portion 91c.

In the present embodiment, the engaging portion 61 is disposed on the outer side of the supported portion 60 in the radial direction R, and the movement restricting portion 62 is disposed on the outer side of the engaging portion 61 in the radial direction R. That is, in the present embodiment, the movement restricting portion 62 is disposed on the outer side of the supported portion 60 and the engaging portion 61 in the radial direction R. In the present embodiment, the restricting member 8 is disposed such that a disposition region of the restricting member 8 in the axial direction L overlaps the ring gear RG. In other words, the restricting member 8 is disposed on the outer side of the ring gear RG in the radial direction R and at a position overlapping the ring gear RG in radial direction view along the radial direction R. Here, regarding the disposition of two members, "a disposition region in a specific direction overlaps" means that the disposition region in the specific direction of one member includes at least a part of the disposition region in the specific direction of the other member.

In the present embodiment, the planetary gear mechanism 31 is disposed on the axial second side L2 of the rotating electric machine 1 and on the axial first side L1 of the first gear 32. That is, in the present embodiment, the rotor 12, the planetary gear mechanism 31, and the first gear 32 are disposed on the first axis X1 in the described order from the axial first side L1 toward the axial second side L2.

In the present embodiment, the rotating electric machine 1 has a larger diameter than the planetary gear mechanism 31. In the example illustrated in FIG. 1, the outer peripheral surface of the stator core 11a of the rotating electric machine 1 is located on the outer side in the radial direction R with respect to a portion of the ring gear RG of the planetary gear mechanism 31 located on the outermost side in the radial direction R. In addition, in the present embodiment, the first gear 32 has a smaller diameter than the planetary gear mechanism 31. In the example illustrated in FIG. 1, a portion of the first gear 32 located on the outermost side in the radial direction R is located further on the inner side in the radial direction R than the portion of the ring gear RG of the planetary gear mechanism 31 located on the outermost side in the radial direction R. Therefore, in the present embodiment, the rotating electric machine 1, the planetary gear mechanism 31, and the first gear 32 are disposed on the first axis X1 such that the dimension in the radial direction R gradually decreases from the axial first side L1 toward the axial second side L2.

The first gear 32 is rotatably supported to the case 9 via a first support bearing B2. The first support bearing B2 is disposed on the inner side of the first gear 32 in the radial direction R and at a position overlapping the first gear 32 in radial direction view along the radial direction R. Here, regarding the disposition of two elements, "overlapping in specific direction view" means that when a virtual straight line parallel to the line-of-sight direction is moved in each direction orthogonal to the virtual straight line, a region where the virtual straight line intersects both of the two elements exists in at least a part of the movement.

In the present embodiment, the second sidewall portion 93a of the case 9 is disposed adjacent to the first gear 32 on the axial second side L2. As described above, in the present embodiment, the second sidewall portion 93a corresponds to a "support wall portion SW" disposed adjacent to the first gear 32 on the opposite side to the planetary gear mechanism 31 side in the axial direction L.

In addition, in the present embodiment, the second sidewall portion 93a is formed with a first protruding portion 93b protruding toward the axial first side L1. In the present embodiment, the first protruding portion 93b is formed to support the first support bearing B2 from the inner side in the radial direction R. As described above, in the present embodiment, the first protruding portion 93b corresponds to a "bearing support portion SWa" that supports the first support bearing B2 from the inner side in the radial direction R. Therefore, in the present embodiment, the third case portion 93 is provided with the bearing support portion SWa.

The second gear 33 meshes with the first gear 32. The second gear 33 is connected to the output member 2 so as to rotate integrally therewith. In the present embodiment, the second gear 33 is formed to have a larger diameter than the first gear 32. Therefore, in the present embodiment, the rotation of the first element E1 (here, the carrier CR) is decelerated between the first gear 32 and the second gear 33 and transmitted to the output member 2.

In the present embodiment, the second gear 33 is rotatably supported to the case 9 via a second support bearing B6. The second support bearing B6 is disposed on the inner side of the second gear 33 in the radial direction R and at a position overlapping the second gear 33 in radial direction view along the radial direction R.

In the present embodiment, the second sidewall portion 93a is formed with a second protruding portion 93c protruding toward the axial first side L1. In the present embodiment, the second protruding portion 93c is formed to support the second support bearing B6 from the outer side in the radial direction R.

In the present embodiment, the differential gear mechanism 4 includes a differential case 41, a pair of pinion gears 42, a first side gear 43, and a second side gear 44. Here, the pair of pinion gears 42, the first side gear 43, and the second side gear 44 are all bevel gears.

The differential case 41 is a hollow member in which the pair of pinion gears 42, and the first side gear 43 and the second side gear 44 are housed. The differential case 41 is connected to the second gear 33 so as to rotate integrally therewith. Therefore, in the present embodiment, the differential case 41 corresponds to the output member 2.

In the present embodiment, the differential case 41 is rotatably supported to the case 9 via a third support bearing B7. In the example illustrated in FIG. 1, the differential case 41 has an end on the axial first side L1 rotatably supported to the second peripheral wall portion 91b of the case 9 via a third support bearing B7. In addition, the differential case 41 has an end on the axial second side L2 rotatably supported to the second protruding portion 93c of the case 9 via the above-described second support bearing B6. In the present embodiment, the second gear 33 is fixed to the differential case 41, and the second gear 33 is supported by the bearing that supports the differential case 41.

The pair of pinion gears 42 is disposed so as to face each other with a space provided therebetween in the radial direction R with reference to the second axis X2. The pair of pinion gears 42 is attached to a pinion shaft 42a supported so as to rotate integrally with the differential case 41. Each of the pair of pinion gears 42 is configured to be rotatable (self-rotatable) about the pinion shaft 42a and to be rotatable (revolvable) about the second axis X2.

The first side gear 43 and the second side gear 44 mesh with the pair of pinion gears 42. The first side gear 43 and the second side gear 44 are disposed so as to rotate about the second axis X2 as a rotation axis. The first side gear 43 is disposed on the axial first side L1 with respect to the pinion shaft 42a. The second side gear 44 is disposed on the axial second side L2 with respect to the pinion shaft 42a.

In the present embodiment, the first side gear 43 is connected, via a transmission shaft 6 extending along the axial direction L, to a first drive shaft DS1 (see FIG. 3) so as to rotate integrally with the first drive shaft DS1, the first drive shaft DS1 being drivingly connected to the wheel W on the axial first side L1. In the example illustrated in FIG. 1, the transmission shaft 6 is inserted to the first side gear 43 on the inner side in the radial direction R from the axial first side L1, and the two are connected to each other by spline engagement.

The transmission shaft 6 is disposed on the second axis X2. In the present embodiment, the transmission shaft 6 is disposed so as to pass through the outer side of the rotating electric machine 1 in the radial direction R inside the case 9 and penetrate the first sidewall portion 92a in the axial direction L. The transmission shaft 6 is connected to the first drive shaft DS1 (see FIG. 3) so as to rotate integrally therewith. In the example illustrated in FIG. 1, a portion of the transmission shaft 6 further on the axial first side L1 than the first case portion 91 is formed in a tubular shape opening to the axial first side L1. The first drive shaft DS1 is inserted to this tubular portion of the transmission shaft 6 on the inner side in the radial direction R from the axial first side L1, and the two are connected to each other by spline engagement.

In the present embodiment, the second side gear 44 is connected to a second drive shaft DS2 (see FIG. 3) so as to rotate integrally therewith, the second drive shaft DS2 being drivingly connected to the wheel W on the axial second side L2. In the example illustrated in FIG. 1, the second drive shaft DS2 is inserted to the second side gear 44 on the inner side in the radial direction R from the axial second side L2, and the two are connected to each other by spline engagement.

In the present embodiment, the differential gear mechanism 4 is disposed on the axial first side L1 with respect to the second gear 33. That is, in the present embodiment, the differential gear mechanism 4 and the second gear 33 are disposed on the second axis X2 in the described order from the axial first side L1 toward the axial second side L2.

In the present embodiment, the second gear 33 has a larger diameter than the differential gear mechanism 4. Therefore, in the present embodiment, the differential gear mechanism 4 and the second gear 33 are disposed on the second axis X2 such that the dimension in the radial direction R gradually increases from the axial first side L1 toward the axial second side L2.

As illustrated in FIGS. 6 and 7, each of the first gear 32 and the second gear 33 is a double helical gear including a pair of tooth portions (meshing portions) having helix directions opposite to each other. More specifically, as illustrated in FIG. 6, the first gear 32 includes a first meshing portion 32a and a second meshing portion 32b in which the helix directions of the tooth portions are different from each other. Further, as illustrated in FIG. 7, the second gear 33 includes a third meshing portion 33a and a fourth meshing portion 33b in which the helix directions of the tooth portions are different from each other. As illustrated in FIGS. 1 and 3, the first meshing portion 32a and the third meshing portion 33a mesh with each other, and the second meshing portion 32b and the fourth meshing portion 33b mesh with each other. Here, "a helix direction of a tooth portion" is a direction in which the tooth portion of a target gear is inclined with respect to the axial center of the target gear.

According to this configuration, as compared with a configuration in which the first gear 32 and the second gear 33 are simply helical gears, the thrust force generated by the meshing between the first gear 32 and the second gear 33 can be reduced. This can simplify the support structure of the first gear 32 and the second gear 33. Therefore, the drive device for vehicle 100 can be easily downsized.

In the present embodiment, one of the first gear 32 and the second gear 33 is supported by the case 9 via the bearing such that the movement thereof with respect to the case 9 to both sides in the axial direction L is restricted, and the other of the first gear 32 and the second gear 33 is supported by the case 9 via the bearing such that the movement thereof with respect to the case 9 to both sides in the axial direction L is allowed. Here, the first gear 32 is supported to the case 9 via the first support bearing B2 such that the first gear 32 is allowed to move to both sides in the axial direction L with respect to the case 9. In this example, the first support bearing B2 is a cylindrical roller bearing, and supports the first gear 32 so that the first gear 32 can move to both sides in the axial direction L with respect to the case 9. In the present embodiment, the first support bearing B2 correspond to a "third bearing".

Meanwhile, the second gear 33 is supported to the case 9 via the second support bearing B6 and the third support bearing B7 such that the second gear 33 is restricted from moving to both sides in the axial direction L with respect to the case 9. In this example, the second support bearing B6 is a cylindrical roller bearing having a flange portion that restricts a cylindrical roller from moving in the axial direction L (cylindrical roller bearing with a shoulder), and supports the second gear 33 via the differential case 41 such that the second gear 33 is restricted from moving toward the axial second side L2. In addition, in the present example, the third support bearing B7 is a deep groove ball bearing, and supports the second gear 33 via the differential case 41 such that the second gear 33 is restricted from moving toward the axial first side L1. Note that the same type of bearing (for example, the deep groove ball bearing) may be used for both the second support bearing B6 and the third support bearing B7. In the present embodiment, the second support bearing B6 and the third support bearing B7 each correspond to a "second bearing".

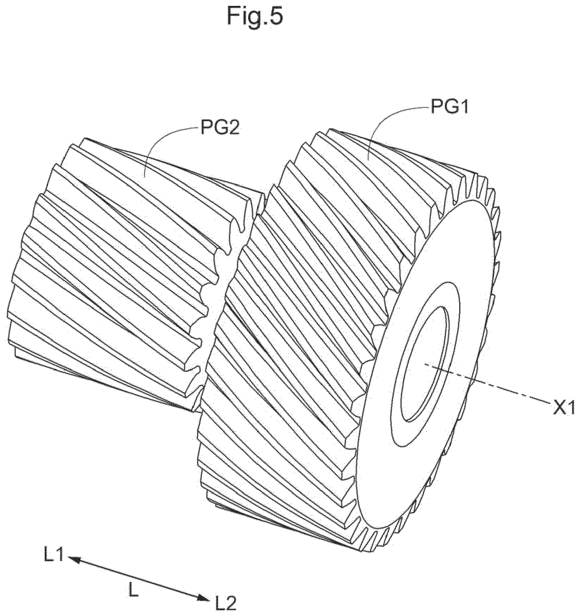

Moreover, as illustrated in FIG. 5, each of the first pinion gear PG1 and the second pinion gear PG2 is a helical gear. The helix directions of the tooth portions of the first pinion gear PG1 and the second pinion gear PG2 are set such that the thrust load that the first pinion gear PG1 receives from the sun gear SG and the thrust load that the second pinion gear PG2 receives from the ring gear RG becomes opposite to each other. Specifically, the first pinion gear PG1 and the second pinion gear PG2 are formed such that the helix directions of their tooth portions are the same. In the present embodiment, the first pinion gear PG1 is formed to have a larger diameter than the second pinion gear PG2, and a helix angle of the tooth portion of the first pinion gear PG1 is larger than a helix angle of the tooth portion of the second pinion gear PG2. The helix angles of the tooth portions of the first pinion gear PG1 and the second pinion gear PG2 are set such that the thrust forces of the first pinion gear PG1 and the second pinion gear PG2 are equal to each other. Here, "a helix angle of a tooth portion" is an angle at which the tooth portion of a target gear is inclined with respect to the axial center of the target gear.

According to this configuration, the thrust force generated by the meshing between the first pinion gear PG1 and the sun gear SG and the thrust force generated by the meshing between the second pinion gear PG2 and the ring gear RG can be reduced by cancelling each other. This can simplify the support structure of the first pinion gear PG1 and the second pinion gear PG2 by the carrier CR. In addition, the rigidity of the carrier CR does not need to be secured high. Therefore, the drive device for vehicle 100 can be easily downsized.

### [Other Embodiments]

(1) In the above embodiment, the configuration has been described as an example in which the enlarged diameter portion 52 is disposed so as to abut from the axial second side L2 on the surface facing the axial second side L2 and formed in the first connecting portion 12c. However, the present invention is not limited to such a configuration. For example, the enlarged diameter portion 52 may be disposed on the axial second side L2 of the partition wall portion 91c, and a thrust bearing that supports the input shaft 5 in the axial direction L may be disposed between the enlarged diameter portion 52 and the partition wall portion 91c in the axial direction L.
(2) In the above embodiment, the configuration in which the carrier CR is the first element E1 and the ring gear RG is the second element E2 has been described as an example. However, the present invention is not limited to such a configuration, and the ring gear RG may be the first element E1 and the carrier CR may be the second element E2.
(3) In the above embodiment, the configuration has been described as an example in which the movement restricting portion 62 is disposed further on the outer side in the radial direction R than the supported portion 60 and the engaging portion 61, and the restricting member 8 is disposed such that the disposition region in the axial direction L overlaps the ring gear RG. However, the present invention is not limited to such a configuration, and the restricting member 8 may be disposed on any one side in the axial direction L (for example, the axial second side L2) with respect to the ring gear RG such that the disposition region of the restricting member 8 in the axial direction L does not overlap the ring gear RG. Furthermore, for example, the movement restricting portion 62 may be disposed such that the disposition region in the radial direction R overlaps with at least one of the supported portion 60 and the engaging portion 61.
(4) In the above embodiment, the configuration has been described as an example in which the drive device for vehicle 100 includes the differential gear mechanism 4 that distributes torque to the pair of wheels W and the differential case 41 functions as the output member 2, but the present invention is not limited to such a configuration. For example, in a case where the drive device for vehicle 100 does not include a differential gear mechanism 4 and a rotating electric machine 1 functions as a driving force source of one wheel W, an element that rotates integrally with a drive shaft drivingly connected to the wheel W may be set as an output member 2.
(5) Note that the configuration disclosed in each of the above-described embodiments can be applied in combination with the configuration disclosed in another embodiment as long as there is no contradiction. Regarding other configurations, the embodiments disclosed in the present description are merely examples in all respects. Therefore, various modifications can be appropriately made without departing from the gist of the present disclosure.

### [Outline of the above embodiment]

Hereinafter, an outline of the drive device for vehicle described above is described.

A drive device for vehicle (100) including:
a rotating electric machine (1) including a rotor (12);
an output member (2) drivingly connected to a wheel (W);
a power transmission mechanism (3) that transmits rotation of the rotor (12) to the output member (2); and
a case (9) that houses the rotating electric machine (1) and the power transmission mechanism (3), in which
the power transmission mechanism (3) includes a planetary gear mechanism (31), a first gear (32), and a second gear (33),
the planetary gear mechanism (31) includes a sun gear (SG), a carrier (CR), and a ring gear (RG),
the sun gear (SG) is connected to the rotor (12) so as to rotate integrally with the rotor (12),
the carrier (CR) rotatably supports a first pinion gear (PG1) and a second pinion gear (PG2) that rotate integrally with each other,
defining that one of the carrier (CR) and the ring gear (RG) is a first element (E1) and the other of the carrier (CR) and the ring gear (RG) is a second element (E2),
the first element (E1) is connected to the first gear (32) so as to rotate integrally with the first gear (32),
the second element (E2) is fixed to the case (9),
the second gear (33) meshes with the first gear (32) and is connected to the output member (2) so as to rotate integrally with the output member (2),
the first pinion gear (PG1) meshes with the sun gear (SG),
the second pinion gear (PG2) meshes with the ring gear (RG),
the first gear (32) and the second gear (33) are each a double helical gear including a pair of tooth portions having mutually opposite helix directions,
the first pinion gear (PG1) and the second pinion gear (PG2) are each a helical gear, and
the first pinion gear (PG1) and the second pinion gear (PG2) each include tooth portions whose helix direction is set such that a thrust load that the first pinion gear (PG1) receives from the sun gear (SG) and a thrust load that the second pinion gear (PG2) receives from the ring gear (RG) are opposite to each other.

According to the present configuration, a two-shaft configuration can be realized in which the rotating electric machine (1), the planetary gear mechanism (31), and the first gear (32), and the output member (2) and the second gear (33), are disposed on different axes from each other. With this configuration, the dimension in the radial direction (R) of the drive device for vehicle (100) can be suppressed small as compared with a multi-shaft configuration including three or more shafts including, for example, a counter gear mechanism or the like.

In addition, according to the present configuration, the carrier (CR) of the planetary gear mechanism (31) supports the first pinion gear (PG1) and the second pinion gear (PG2) that rotate integrally with each other. The sun gear (SG) that rotates integrally with the rotor (12) meshes with the first pinion gear (PG1). Further, one of the carrier (CR) and the ring gear (RG) is connected to the first gear (32) so as to rotate integrally therewith, and the other of the carrier (CR) and the ring gear (RG) is fixed to the case (9). The ring gear (RG) meshes with the second pinion gear (PG2). Here, because the gear diameters and the number of teeth of the first pinion gear (PG1) and the second pinion gear (PG2) can be set independently, according to the present configuration, a large reduction ratio can be easily secured by the planetary gear mechanism (31) configured as described above without having a plurality of planetary gear mechanisms provided. In addition, this also enables even a small rotating electric machine (1) to transmit high torque to the output member (2).

In addition, according to the present configuration, because the first gear (32) and the second gear (33) are double helical gears, thrust loads generated in the first gear (32) and the second gear (33) can be reduced, and a large thrust load can be prevented from being transmitted to the transmission member that transmits power between these gears (32, 33). Furthermore, because the first pinion gear (PG1) and the second pinion gear (PG2) are helical gears in which the helix directions of the respective tooth portions are set as described above, the thrust load generated in the carrier (CR) that supports the first pinion gear (PG1) and the second pinion gear (PG2) can be reduced, and a large thrust load can be prevented from being transmitted to the transmission member that transmits power to and from the carrier (CR). Therefore, for the first gear (32), the second gear (33), the carrier (CR), and the transmission member that transmits power to and from these members (32, 33, CR), a support structure can be simplified and the need to ensure high rigidity can be reduced, and the drive device for vehicle (100) can be easily downsized.

As described above, according to the present configuration, the drive device for vehicle (100) that can be easily downsized while a large reduction ratio is ensured can be realized.

Here, the carrier (CR) is preferably the first element (E1) and the ring gear (RG) is preferably the second element (E2).

According to the present configuration, because the first element (E1) connected so as to rotate integrally with the first gear (32) that can reduce the thrust load is the carrier (CR) that can also reduce the thrust load, a large thrust load does not need to be supported at the connecting portion between the first gear (32) and the first element (E1). Therefore, the configuration of the connecting portion can be simplified, such as by eliminating the need to provide a bearing for supporting a thrust load, and the drive device for vehicle (100) can be easily downsized.

In the above configuration, defining that a direction along a rotation axis of the rotor (12) is an axial direction (L), a direction orthogonal to the rotation axis is a radial direction (R), and a direction around the rotation axis is a circumferential direction (C),
the ring gear (RG) preferably has an outer peripheral portion provided with: a supported portion (60) that comes into contact with an inner surface of the case (9) and is supported by the case (9) from an outer side in the radial direction (R); an engaging portion (61) that engages with the inner surface of the case (9) in the circumferential direction (C); and a movement restricting portion (62) that abuts in the axial direction (L) on a restricting member (8) attached to the inner surface of the case (9) to restrict movement in the axial direction (L), and
the movement restricting portion (62) is preferably disposed further on an outer side in the radial direction (R) than the supported portion (60) and the engaging portion (61).

According to the present configuration, the supported portion (60) for positioning and holding the ring gear (RG) in the radial direction (R) and the movement restricting portion (62) that abuts on the restricting member (8) can be provided together in the outer peripheral portion of the ring gear (RG) in which the engaging portion (61) for non-rotatably connecting the ring gear (RG) to the case (9) is formed. Although a thrust load is generated in the ring gear (RG) by meshing with the second pinion gear (PG2), according to the present configuration, the thrust load acting in a direction in which the movement restricting portion (62) abuts on the restricting member (8) can be received by the restricting member (8). Therefore, even when there is no bearing that supports the thrust load in the above direction, the ring gear (RG) can be appropriately supported in the axial direction (L). According to the present configuration, because the movement restricting portion (62) is disposed on the outer side in the radial direction (R) with respect to the supported portion (60) and the engaging portion (61), a gap required for assembling the restricting member (8) is easily secured on the outer side in the radial direction (R) with respect to the ring gear (RG). This enables the restricting member (8) to be easily disposed such that the disposition region in the axial direction (L) overlaps the ring gear (RG), and the drive device for vehicle (100) can be easily downsized in the axial direction (L).

In the drive device for vehicle (100) having each of the above configurations, defining that a direction along a rotation axis of the rotor (12) is an axial direction (L), a side on which the rotor (12) is disposed with respect to the sun gear (SG) in the axial direction (L) is an axial first side (L1), and an opposite side to the axial first side (L1) is an axial second side (L2),
the rotor (12) is preferably supported to the case (9) via a first bearing (B 11, B 12) so as to be restricted from moving to both sides in the axial direction (L) with respect to the case (9),
the sun gear (SG) is preferably formed integrally with a member, the member including a second connecting portion (50) connected to a first connecting portion (12c) formed on the rotor (12) and connected so as to rotate integrally with the first connecting portion (12c), and
the second connecting portion (50) preferably includes an abutting portion (52) that abuts from the axial second side (L2) on a surface formed in the first connecting portion (12c) and facing the axial second side (L2).

According to the present configuration, the thrust load facing the axial first side (L1) and generated in the sun gear (SG) by meshing with the first pinion gear (PG1) can be transmitted to the rotor (12) via the abutting portion (52) and received by the first bearing (B11, B12). Therefore, a bearing for supporting the thrust load facing the axial first side (L1) and generated in the sun gear (SG) does not need to be provided separately, and the drive device for vehicle (100) can be easily downsized.

Further, defining that a direction along a rotation axis of the rotor (12) is an axial direction (L),
one of the first gear (32) and the second gear (33) is preferably supported to the case (9) via a second bearing (B6, B7) so as to be restricted from moving to both sides in the axial direction (L) with respect to the case (9), and
the other of the first gear (32) and the second gear (33) is preferably supported to the case (9) via a third bearing (B2) so as to be allowed to move to both sides in the axial direction (L) with respect to the case (9).

According to the present configuration, an alignment function of the double helical gear for eliminating the positional deviation in the axial direction (L) between the first gear (32) and the second gear (33) can be appropriately secured while the position of a gear pair of the first gear (32) and the second gear (33) in the axial direction (L) is maintained within a prescribed range determined according to the configuration of the second bearing (B6, B7). Therefore, vibration generated in the drive device for vehicle (100) can be reduced.

The drive device for vehicle according to the present disclosure only needs to be able to achieve at least one of the effects described above.

### INDUSTRIAL APPLICABILITY

The technique related to the present disclosure can be used for a drive device for vehicle including a rotating electric machine including a rotor, an output member drivingly connected to wheels, a power transmission mechanism that transmits rotation of the rotor to the output member, and a case that houses the rotating electric machine and the power transmission mechanism.

### REFERENCE SIGNS LIST

100: Drive device for vehicle, 1: Rotating electric machine, 12: Rotor, 12c: First connecting portion, 2: Output member, 3: Power transmission mechanism, 31: Planetary gear mechanism, 32: First gear, 33: Second gear, 50: Second connecting portion, 52: Enlarged diameter portion (Abutting portion), 60: Supported portion, 61: Engaging portion, 62: Movement restricting portion, 8: Restricting member, 9: Case, SG: Sun gear, CR: Carrier, RG: Ring gear, PG1: First pinion gear, PG2: Second pinion gear, E1: First element, E2: Second element, B11: First rotor bearing (First bearing), B12: Second rotor bearing (First bearing), B2: First support bearing (Third bearing), B6: Second support bearing (Second bearing), B7: Third support bearing (Second bearing), W: Wheel, C: Circumferential direction, L: Axial direction, L1: Axial first side, L2: Axial second side, and R: Radial direction

## Claims

1. A drive device for vehicle, comprising:
a rotating electric machine including a rotor;
an output member drivingly connected to a wheel;
a power transmission mechanism that transmits rotation of the rotor to the output member; and
a case that houses the rotating electric machine and the power transmission mechanism, wherein
the power transmission mechanism includes a planetary gear mechanism, a first gear, and a second gear,
the planetary gear mechanism includes a sun gear, a carrier, and a ring gear,
the sun gear is connected to the rotor so as to rotate integrally with the rotor,
the carrier rotatably supports a first pinion gear and a second pinion gear that rotate integrally with each other,
defining that one of the carrier and the ring gear is a first element and an other of the carrier and the ring gear is a second element,
the first element is connected to the first gear so as to rotate integrally with the first gear,
the second element is fixed to the case,
the second gear meshes with the first gear and is connected to the output member so as to rotate integrally with the output member,
the first pinion gear meshes with the sun gear,
the second pinion gear meshes with the ring gear,
the first gear and the second gear are each a double helical gear including a pair of tooth portions having mutually opposite helix directions,
the first pinion gear and the second pinion gear are each a helical gear, and
the first pinion gear and the second pinion gear each include tooth portions whose helix direction is set such that a thrust load that the first pinion gear receives from the sun gear and a thrust load that the second pinion gear receives from the ring gear are opposite to each other.

2. The drive device for vehicle according to claim 1, wherein the carrier is the first element, and the ring gear is the second element.

3. The drive device for vehicle according to claim 2, wherein,
defining that a direction along a rotation axis of the rotor is an axial direction, a direction orthogonal to the rotation axis is a radial direction, and a direction around the rotation axis is a circumferential direction,
the ring gear has an outer peripheral portion provided with: a supported portion that comes into contact with an inner surface of the case and is supported by the case from an outer side in the radial direction; an engaging portion that engages with the inner surface of the case in the circumferential direction; and a movement restricting portion that abuts in the axial direction on a restricting member attached to the inner surface of the case to restrict movement in the axial direction, and
the movement restricting portion is disposed further on an outer side in the radial direction than the supported portion and the engaging portion.

4. The drive device for vehicle according to any one of claims 1 to 3, wherein,
defining that a direction along a rotation axis of the rotor is an axial direction, a side on which the rotor is disposed with respect to the sun gear in the axial direction is an axial first side, and an opposite side to the axial first side is an axial second side,
the rotor is supported to the case via a first bearing so as to be restricted from moving to both sides in the axial direction with respect to the case,
the sun gear is formed integrally with a member, the member including a second connecting portion connected to a first connecting portion formed on the rotor and connected so as to rotate integrally with the first connecting portion, and
the second connecting portion includes an abutting portion that abuts from the axial second side on a surface formed in the first connecting portion and facing the axial second side.

5. The drive device for vehicle according to any one of claims 1 to 4, wherein,
defining that a direction along a rotation axis of the rotor is an axial direction,
one of the first gear and the second gear is supported to the case via a second bearing so as to be restricted from moving to both sides in the axial direction with respect to the case, and
an other of the first gear and the second gear is supported to the case via a third bearing so as to be allowed to move to both sides in the axial direction with respect to the case.
